# EUROPEAN PATENT SPECIFICATION

(11) **EP 2 618 612 B1**
(45) Date of publication and mention of the grant of the patent: **26.08.2015**
(21) Application number: 11826358.1
(22) Date of filing: 29.06.2011
(51) Int. Cl.: H04W 52/02, H04W 84/18

(54) **ENERGY-SAVING MANAGEMENT METHOD, SYSTEM FOR WIRELESS SENSOR NETWORK AND REMOTE MANAGEMENT SERVER**
STROMSPARMANAGEMENTVERFAHREN, SYSTEM FÜR DRAHTLOSE SENSORNETZWERKE UND FERNMANAGEMENTSERVER DAFÜR
PROCÉDÉ ET SYSTÈME DE GESTION D'ÉCONOMIE D'ÉNERGIE POUR RÉSEAU DE CAPTEURS SANS FIL ET SERVEUR DE GESTION DISTANT

(30) Priority: 21.09.2010 CN 201010291640
(43) Date of publication of application: 24.07.2013
(73) Proprietor: ZTE Corporation, Shenzhen, Guangdong 518057 (CN)
(72) Inventor: SUN, Aifang, Shenzhen Guangdong 518057 (CN); LING, Zhihao, Shenzhen Guangdong 518057 (CN); YUAN, Yifeng, Shenzhen Guangdong 518057 (CN); GAO, Chong, Shenzhen Guangdong 518057 (CN); YU, Wenjun, Shenzhen Guangdong 518057 (CN)
(74) Representative: South, Nicholas Geoffrey
(86) International application number: PCT/CN2011/076572
(87) International publication number: WO 2012/037831

(56) References cited:
- EP-A1- 2 227 065
- CN-A- 101 959 295
- CN-Y- 201 417 392
- CN-Y- 201 417 965
- CN-Y- 201 429 177
- CN-Y- 201 429 177
- US-A1- 2006 023 679

## Description

### Technical Field

The present invention relates to an energy-saving technology for a wireless sensor network, in particular to an energy-saving management method and system for a wireless sensor network, and a remote management server.

### Background

In a wireless sensor network, a wireless sensor node is often powered by a battery, which has an extremely limited power supply capacity and causes inconvenience when frequently charged or replaced. Therefore, how to reduce power consumption of a node and prolong lifetime of the wireless sensor network is worth studying.

At present, there are mainly two kinds of methods and technologies for studying energy saving of the wireless sensor network according to different study objects: an energy-saving technology for a single node and that for the whole wireless sensor network. The energy-saving technology for the single node mainly comprises: lower power consumption optimization for a hardware circuit and a software operating system of the node, energy-saving design for a wireless radio frequency transceiver, hibernation and wakeup mechanism, and the like. The energy-saving technology for the whole wireless sensor network mainly comprises: routing protocol based on energy efficiency, network topology management and control, data fusion processing and the like.

A characteristic of a conventional method is that certain energy-saving processing is performed only by the wireless sensor network itself. Whereas in the application background of an Internet of Things, the wireless sensor network can be coupled with a remote management server by a gateway and a remote communication network, therefore, how to utilize the remote management server to provide the wireless sensor network with an energy-saving management service is worth studying.

EP 2 227 065 A1 relates to wireless sensor networks and to body area networks including wirelessly-communicating sensors disposed on or around a human or animal body; US 2006/023679 A1 relates broadly to wireless transceivers, including the design of a wireless transceiver as well as to forming ad hoc networks with wireless transceivers and to communication protocols between wireless transceivers; CN 201 429 177 Y relates to the system for remote intelligent real-time monitoring and optimization evaluation of air conditioner energy conservation.

### Summary

In view of the above, the present invention provides an energy-saving management method and system for a wireless sensor network, and a remote management server, in order to utilize the remote management server to provide the wireless sensor network with an energy-saving management service.

The technical solution of the present invention is implemented as follows.

The present invention provides an energy-saving management method for a wireless sensor network, which comprises:
the wireless sensor network sending remaining energy information of a node, and/or network topology information, and/or node hibernation information to a remote management server through a gateway device;
the remote management server storing the remaining energy information of the node, and/or the network topology information, and/or the node hibernation information, making an energy-saving decision according to the remaining energy information of the node, and/or the network topology information, and/or the node hibernation information which are stored, and sending the energy-saving decision to the wireless sensor network through the gateway device; and
the wireless sensor network making a response according to the energy-saving decision of the remote management server.

In the solution, the wireless sensor network sending the remaining energy information of the node to the remote management server through the gateway device is: sending the remaining energy information of the node together with sensing data to the remote management server.

In the solution, an information storage format of the remote management server comprises: a network identifier, a node identifier, information of a routing from the node to the gateway device, the remaining energy information of the node, and the node hibernation information, wherein the remaining energy information of the node comprises an absolute value of remaining energy and percentage of the remaining energy.

In the solution, the energy-saving decision of the remote management server comprises: control for network topology, and control for hibernation and wakeup of the node, specifically: in the control for the network topology, the remote management server determining a type of the wireless sensor network according to the network topology information that is stored, and replacing, according to an energy balance rule, a routing node or a cluster head node at regular intervals or each time when certain energy is consumed; and in the control for the hibernation and wakeup of the node, the remote management server judging whether the node supports hibernation according to the node hibernation information, and sending a hibernation configuration command to the node when the node supports the hibernation and is not in a hibernation mode, and the node configuring hibernation time for the node according to a situation of a data uploading task, entering a hibernation state after the data uploading task is completed, and automatically waking up when the hibernation time is up.

The present invention provides an energy-saving management system for a wireless sensor network, comprising: the wireless sensor network, a gateway device and a remote management server, wherein
the wireless sensor network is configured to send remaining energy information of a node, and/or network topology information, and/or node hibernation information to the remote management server through the gateway device and make a response according to a energy-saving decision of the remote management server; and
the remote management server is configured to store the remaining energy information of the node, and/or the network topology information, and/or the node hibernation information, make the energy-saving decision according to the remaining energy information of the node, and/or the network topology information, and/or the node hibernation information which are stored, and send the energy-saving decision to the wireless sensor network through the gateway device.

In the solution, the wireless sensor network sending the remaining energy information of the node to the remote management server through the gateway device is: the node of the wireless sensor network sending the remaining energy information of the node to the gateway device according to a set period, and the gateway device sending remaining energy information of all nodes to the remote management server after collecting the remaining energy information of all nodes; or, the gateway device actively initiating a data request to the wireless sensor network, and the wireless sensor network sending the remaining energy information of the node to the remote management server through the gateway device; or, the remote management server actively querying the wireless sensor network about the remaining energy information of the node, and the wireless sensor network making a response after receiving a query command.

In the solution, the wireless sensor network sending the remaining energy information of the node to the remote management server through the gateway device is: sending the remaining energy information of the node together with sensing data to the remote management server.

In the solution, the wireless sensor network sending the network topology information to the remote management server through the gateway device is: a new node establishing a routing to the gateway device when the new node is added to the wireless sensor network, and the gateway device sending information of the routing, which is newly established, to the remote management server after the routing is completely established; or, if a node is removed from the wireless sensor network, the gateway device sending information indicating that the node has been removed to the remote management server when finding in a next communication process that the node has been removed; or, when a node is moved, if the moved node has established a new routing to the gateway device before the gateway device finds that an original communication line is invalid, the gateway device sending information of the new routing to the remote management server, otherwise, performing a process for a case that the node is removed from the wireless sensor network.

The present invention provides a remote management server, comprising: an information storage module and an energy-saving decision making module, wherein
the information storage module is configured to store remaining energy information of a node, network topology information and node hibernation information which are received; and
the energy-saving decision making module is configured to make an energy-saving decision according to the remaining energy information of the node, and/or the network topology information, and/or the node hibernation information which are stored, and send the energy-saving decision to the wireless sensor network through the gateway device.

In the solution, an information storage format of the information storage module comprises: a network identifier, a node identifier, information of a routing from the node to the gateway device, the remaining energy information of the node, and the node hibernation information, wherein the remaining energy information of the node comprises an absolute value of remaining energy and percentage of the remaining energy;
the energy-saving decision of the energy-saving decision making module comprises: control for network topology, and control for hibernation and wakeup of the node; and the energy-saving decision made by the energy-saving decision making module is specifically: in the control for the network topology, the remote management server determining a type of the wireless sensor network according to the network topology information that is stored, and replacing, according to an energy balance rule, a routing node or a cluster head node at regular intervals or each time when certain energy is consumed; and in the control for the hibernation and wakeup of the node, the remote management server judging whether the node supports hibernation according to the node hibernation information, and sending a hibernation configuration command to the node when the node supports the hibernation and is not in a hibernation mode, and the node configuring hibernation time for the node according to a situation of a data uploading task, entering a hibernation state after the data uploading task is completed, and automatically waking up when the hibernation time is up.

Through the solutions of the present invention, the remote management server provides the wireless sensor network with an energy-saving strategy so as to reduce the processing amount of the wireless sensor network caused by network topology management, thereby reducing the power consumption, prolonging the lifetime, and implementing the remote energy-saving management of the wireless sensor network.

### Brief Description of the Drawings

Fig. 1 is a diagram showing the composition structure of an energy-saving management system for a wireless sensor network in accordance with an embodiment of the present invention;
Fig. 2 is a diagram showing the flow of an energy-saving management method for a wireless sensor network in accordance with an embodiment of the present invention; and
Fig. 3 is a diagram showing the composition of an information storage format of a remote management server in accordance with an embodiment of the present invention.

### Detailed Description of the Embodiments

A basic principle of the present invention is: a wireless sensor network sends remaining energy information of a node, and/or network topology information, and/or node hibernation information to a remote management server through a gateway device; and the remote management server stores the remaining energy information of the node, and/or the network topology information, and/or the node hibernation information, makes an energy-saving decision according to the stored information, and sends the energy-saving decision to the wireless sensor network through the gateway device.

In the wireless sensor network, the remote management server cannot complete all the energy-saving processing. However, for the energy-saving processing of a single node, the remote management server can control hibernation and wakeup of a node; and for the energy-saving processing of the whole wireless sensor network, the remote management server can manage and control the network topology.

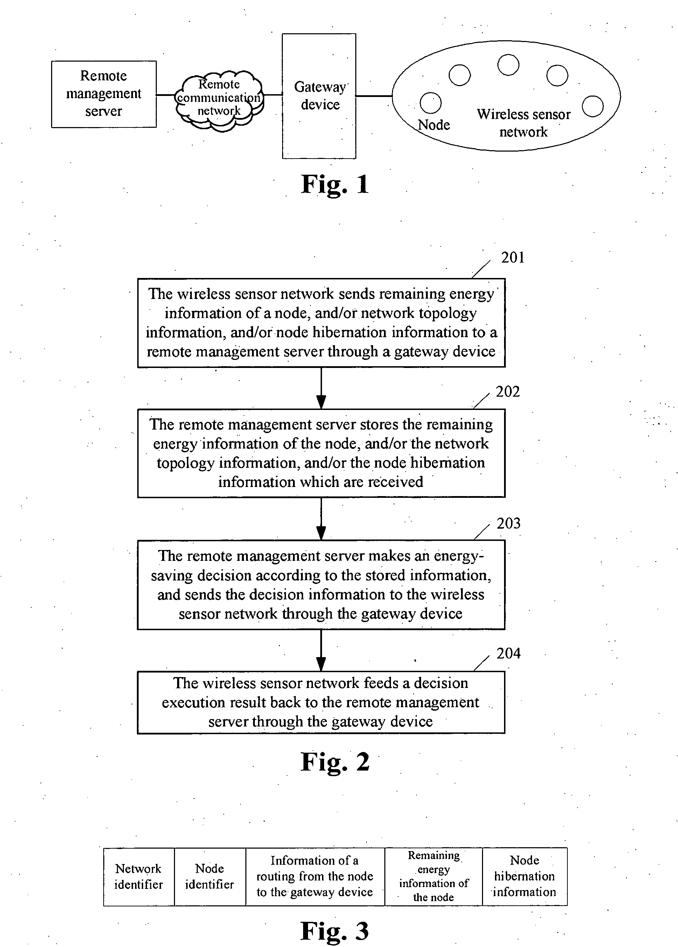

As shown in Fig. 1, an energy-saving management system for the wireless sensor network comprises a wireless sensor network, a gateway device and a remote management server, wherein the gateway device exchanges information with the remote management server through a remote communication network which supports one or more of the following ways: Second Generation (2G) mobile communication, 3G mobile communication, various x Digital Subscribe Lines (xDSLs), Fiber-to-the-x (FTTx), broadband wireless access, remote access of satellite/microwave and the like.

The solutions of the present invention will be described below through embodiments in detail.

As shown in Fig. 2, an energy-saving management method for a wireless sensor network in accordance with an embodiment of the present invention comprises steps as follows.

Step 201: The wireless sensor network sends remaining energy information of a node, and/or network topology information, and/or node hibernation information to a remote management server through a gateway device.

In the Step, the wireless sensor network may periodically send the remaining energy information of the node to the remote management server, specifically: a node of the wireless sensor network sends its own remaining energy information to the gateway device according to a set period, and the gateway device sends remaining energy information of all nodes to the remote management server after collecting the remaining energy information of all the nodes, wherein the period of sending the remaining energy information of the node may be determined by the remote management server or the gateway device.

The gateway device may actively initiate a data request to the wireless sensor network if not receiving the remaining energy information of the node in a specific period, and the wireless sensor network sends the remaining energy information of the node to the remote management server through the gateway device; or, the remote management server may actively query the wireless sensor network about the remaining energy information of the node through the gateway device, and the wireless sensor network makes a response after receiving a query command.

In order to save the power consumed for additionally sending the remaining energy information by the node, the remaining energy information of the node can be sent together with sensing data to the remote management server. The sensing data refer to the data which are periodically uploaded by the node in order to achieve a sensing task of the node. It is assumed that an uploading period of the remaining energy information of the node and an uploading period of the sensing data are respectively T1 and T2. If T1 is greater than T2, the node only needs to upload the remaining energy information once within T1, which is uploaded together with the sensing data. If T1 is less than T2, the node must additionally upload the remaining energy information of the node separately. It is unnecessary for the node to upload the remaining energy information very frequently; therefore, T1 should be generally greater than T2.

In addition, the wireless sensor network sends the network topology information to the remote management server when the network topology is changed. For example, a new node establishes a routing to the gateway device when the new node is added to the wireless sensor network, and then the gateway device sends information of the new established routing to the remote management server after the routing is completely established; or, if a node is removed from the wireless sensor network, the gateway device finds that the node has been removed in a next communication process and sends information indicating that the node has been removed to the remote management server; or, when a node is moved, if the gateway device finds that the moved node has established a new routing to the gateway device before an original communication line becomes invalid, the gateway device sends information of the new routing to the remote management server, otherwise, a process for a case that the node is removed from the wireless sensor network is performed, here, the gateway device can judge whether the communication line is normal according to the communication with the wireless sensor network, which is completely the same as that in the conventional art, thereby needing no further description.

When a network is established or a new node is added to the wireless sensor network, the new node sends the node hibernation information to the remote management server, wherein the node hibernation information comprises: whether the node supports a hibernation mode, and whether the node has been in the hibernation mode.

Step 202: The remote management server stores the remaining energy information of the node, and/or the network topology information, and/or the node hibernation information which are received.

In the step, as shown in Fig. 3, an information storage format of the remote management server comprises: a network identifier, a node identifier, information of a routing from the node to the gateway device, the remaining energy information of the node, and the node hibernation information. The network identifier is used for identifying different wireless sensor networks either by an Internet Protocol (IP) address identifier of the gateway device or by other identifiers, and nodes in the same wireless sensor network have the same network identifier. The node identifier is used for identifying a node in the wireless sensor network by an IP address or a Media Access Control (MAC) address of the node. The information of the routing from the node to the gateway device is used for recording a detailed path from the node to the gateway device. The remaining energy information of the node is used for recording current remaining energy of the node, and comprises an absolute value of the remaining energy and percentage of the remaining energy. The node hibernation information is used for indicating whether the node supports the hibernation mode and whether the node has been in the hibernation mode.

The process that the remote management server stores the remaining energy information of the node is: the remote management server updates and stores the remaining energy information of a corresponding node.

The process that the remote management server stores the network topology information comprises: for a newly-added node, the remote management server creates one piece of information for the node to store the information of the routing from the node to the gateway device; for a removed node, the remote management server deletes the information of the routing from the node to the gateway device; and for a moved node, the remote management server queries and modifies the information of the routing from the node to the gateway device.

Step 203: The remote management server makes an energy-saving decision according to the stored information, and sends the decision information to the wireless sensor network through the gateway device.

In the Step, the energy-saving decision mainly comprises: control for network topology, and control for hibernation and wakeup of the node, In the control for the network topology, a cluster head node or a routing node which is responsible for data forwarding is easy to become invalid as much energy will be consumed due to the data forwarding, and the remote management server determines a type of the wireless sensor network according to the stored network topology information, and replaces, according to an energy balance rule, the routing node or the cluster head node at regular intervals or each time when certain energy is consumed. The type of the wireless sensor network comprises: a structure based on a cluster, and a structure based on a routing node.

If the wireless sensor network is of the structure based on the cluster, the remote management server makes an energy-saving decision according to the remaining energy information of the cluster head node at regular intervals or whenever the upload of the remaining energy information of the wireless sensor network reaches specific times. If the remaining energy of the cluster head node is lower than a threshold or is significantly lower than that of some nodes in the cluster, the remote management server replaces the cluster head node with a node having the most remaining energy in the cluster, and sends the decision information to the wireless sensor network through the gateway device. After a new cluster head node receives the decision information from the remote management server, the new cluster head node executes cluster head functions and broadcasts a cluster head replacement message to other nodes in the cluster, which are then added to the new cluster and communicate with the new cluster head node, meanwhile, the original cluster head node becomes an ordinary node in the cluster.

If the wireless sensor network is of the structure based on the routing node which has a limited power supply capacity, for example, when a battery is used for power supply, the remote management server makes an energy-saving decision according to the remaining energy information of the routing node. If the remaining energy of the routing node is lower than a threshold or is significantly lower than that of some other sub nodes, the wireless sensor network replaces the routing node with a sub node having the most remaining energy and sends the decision information to the wireless sensor network through the gateway device. After a new routing node receives the decision information from the remote management server, the new routing node executes routing functions and broadcasts a routing replacement message to the sub nodes of the original routing node, each of which changes its own routing information and changes its own father node into the new routing node, meanwhile, the original routing node becomes an ordinary node.

In the control for the hibernation and wakeup of the node, the remote management server judges whether the node supports hibernation according to the node hibernation information, then judges whether the node has been in the hibernation mode if the node supports the hibernation, and sends a hibernation configuration command to the node if the node is not in the hibernation mode. After receiving the hibernation configuration command, the node configures hibernation time of the node according to a situation of a data uploading task of the node, such as: data uploading interval, enters a hibernation state after completing the period task of uploading data, i.e., the tasks in Step 201 to Step 204, and automatically wakes up when the hibernation time is up.

Step 204: The wireless sensor network feeds a decision execution result back to the remote management server through the gateway device.

In the Step, the wireless sensor network makes a response, i.e. implements energy-saving, according to the energy-saving decision of the remote management server, wherein the energy-saving specifically comprises: adjusting the network topology, entering hibernation, waking up and the like. After the execution of the energy-saving, the wireless sensor network feeds an execution result, i.e., whether the execution is successful or not, back to the remote management server through the gateway device.

In order to implement the method, an embodiment of the present invention also provides an energy-saving management system for a wireless sensor network. The system comprises: a wireless sensor network, a gateway device and a remote management server, wherein
the wireless sensor network is configured to send remaining energy information of a node, and/or network topology information, and/or node hibernation information to the remote management server through the gateway device and make a response according to a energy-saving decision of the remote management server, specifically comprising: adjusting the network topology, entering hibernation, waking up etc.; and
the remote management server is configured to store the remaining energy information of the node, and/or the network topology information, and/or the node hibernation information, make the energy-saving decision according to the information above, and send the energy-saving decision to the wireless sensor network through the gateway device.

The process that the wireless sensor network sends the remaining energy information of the node to the remote management server through the gateway device is: the node of the wireless sensor network sends the remaining energy information of the node to the gateway device according to a set period, and the gateway device sends remaining energy information of all nodes to the remote management server after collecting the remaining energy information of all nodes; or, the gateway device actively initiates a data request to the wireless sensor network, and the wireless sensor network sends the remaining energy information of the node to the remote management server through the gateway device; or, the remote management server actively queries the wireless sensor network about the remaining energy information of the node, and the wireless sensor network makes a response after receiving a query command.

The process that the wireless sensor network sends the remaining energy information of the node to the remote management server through the gateway device is: the wireless sensor network sends the remaining energy information of the node together with sensing data to the remote management server.

The process that the wireless sensor network sends the network topology information to the remote management server through the gateway device is: a new node establishes a routing to the gateway device when the new node is added to the wireless sensor network, and the gateway device sends information of the routing, which is newly established, to the remote management server after the routing is completely established; or, if a node is removed from the wireless sensor network, the gateway device sends information indicating that the node has been removed to the remote management server when finding in a next communication process that the node has been removed; or, when a node is moved, if the moved node has established a new routing to the gateway device before the gateway device finds that an original communication line is invalid, the gateway device sends information of the new routing to the remote management server, otherwise, performs a process for a case that the node is removed from the wireless sensor network.

An embodiment of the present invention also provides a remote management server, which comprises: an information storing module and an energy-saving decision making module, wherein
the information storage module is configured to store remaining energy information of a node, network topology information and node hibernation information which are received; and
the energy-saving decision making module is configured to make an energy-saving decision according to the remaining energy information of the node, and/or the network topology information, and/or the node hibernation information which are stored, and send the energy-saving decision to the wireless sensor network through the gateway device.

An information storage format of the information storage module comprises: a network identifier, a node identifier, information of a routing from the node to the gateway device, the remaining energy information of the node, and the node hibernation information, wherein
the network identifier is used for identifying different wireless sensor networks either by an IP address identifier of the gateway device or by other identifiers;
the node identifier is used for identifying the node in the wireless sensor network by an IP address or MAC address identifier of the node;
the information of the routing from the node to the gateway device is used for recording a detailed path from the node to the gateway device;
the remaining energy information of the node is used for recording current remaining energy of the node, and comprises an absolute value of the remaining energy and percentage of the remaining energy; and
the node hibernation information is used for indicating whether the node supports the hibernation mode and whether the node has been in the hibernation mode.

The energy-saving decision of the energy-saving decision making module comprises: control for network topology, and control for hibernation and wakeup of the node; and the energy-saving decision made by the energy-saving decision making module is specifically: in the control for the network topology, the remote management server determines a type of the wireless sensor network according to the network topology information that is stored, and replaces, according to an energy balance rule, a routing node or a cluster head node at regular intervals or each time when certain energy is consumed; and in the control for the hibernation and wakeup of the node, the remote management server judges whether the node supports hibernation according to the node hibernation information, and sends a hibernation configuration command to the node when the node supports the hibernation and is not in a hibernation mode, and the node configures hibernation time for the node according to a situation of a data uploading task, enters a hibernation state after the data uploading task is completed, and automatically wakes up when the hibernation time is up.

What described above are only preferred embodiments of the present invention, and not used for limiting the protection scope of the present invention; and any modifications, equivalent replacements, improvements and the like within the principle of the present invention shall fall within the protection scope of the present invention

## Claims

1. An energy-saving management method for a wireless sensor network, comprising:
the wireless sensor network sending remaining energy information of a node, and/or network topology information, and/or node hibernation information to a remote management server through a gateway device (201);
the remote management server storing the remaining energy information of the node, and/or the network topology information, and/or the node hibernation information (202), making an energy-saving decision according to the remaining energy information of the node, and/or the network topology information, and/or the node hibernation information which are stored, and sending the energy-saving decision to the wireless sensor network through the gateway device (203), wherein the energy-saving decision of the remote management server comprises: control for network topology, and control for hibernation and wakeup of the node, specifically:
in the control for the network topology, the remote management server determining a type of the wireless sensor network according to the network topology information that is stored, and replacing, according to an energy balance rule, a routing node or a cluster head node at regular intervals or each time when certain energy is consumed; and
in the control for the hibernation and wakeup of the node, the remote management server judging whether the node supports hibernation according to the node hibernation information, and sending a hibernation configuration command to the node when the node supports the hibernation and is not in a hibernation mode, and the node configuring hibernation time for the node according to a situation of a data uploading task, entering a hibernation state after the data uploading task is completed, and automatically waking up when the hibernation time is up; and
the wireless sensor network making a response according to the energy-saving decision of the remote management server (204).

2. The method according to claim 1, **characterized in that** the wireless sensor network sending the remaining energy information of the node to the remote management server through the gateway device is:
the node of the wireless sensor network sending the remaining energy information of the node to the gateway device according to a set period, and the gateway device sending remaining energy information of all nodes to the remote management server after collecting the remaining energy information of all nodes; or,
the gateway device actively initiating a data request to the wireless sensor network, and the wireless sensor network sending the remaining energy information of the node to the remote management server through the gateway device; or,
the remote management server actively querying the wireless sensor network about the remaining energy information of the node, and the wireless sensor network making a response after receiving a query command.

3. The method according to claim 1, **characterized in that** the wireless sensor network sending the remaining energy information of the node to the remote management server through the gateway device is: sending the remaining energy information of the node together with sensing data to the remote management server.

4. The method according to claim 1, **characterized in that** the wireless sensor network sending the network topology information to the remote management server through the gateway device is:
a new node establishing a routing to the gateway device when the new node is added to the wireless sensor network, and the gateway device sending information of the routing, which is newly established, to the remote management server after the routing is completely established; or,
if a node is removed from the wireless sensor network, the gateway device sending information indicating that the node has been removed to the remote management server when finding, in a next communication process, that the node has been removed; or,
when a node is moved, if the moved node has established a new routing to the gateway device before the gateway device finds that an original communication line is invalid, the gateway device sending information of the new routing to the remote management server, otherwise, performing a process for a case that the node is removed from the wireless sensor network.

5. The method according to claim 1, **characterized in that** an information storage format of the remote management server comprises: a network identifier, a node identifier, information of a routing from the node to the gateway device, the remaining energy information of the node, and the node hibernation information, wherein the remaining energy information of the node comprises an absolute value of remaining energy and percentage of the remaining energy.

6. A remote management server, comprising: an information storage module and an energy-saving decision making module, wherein
the information storage module is configured to store remaining energy information of a node, network topology information and node hibernation information which are received (202), wherein an information storage format of the information storage module comprises: a network identifier, a node identifier, information of a routing from the node to the gateway device, the remaining energy information of the node, and the node hibernation information, wherein the remaining energy information of the node comprises an absolute value of remaining energy and percentage of the remaining energy; and
the energy-saving decision making module is configured to make an energy-saving decision according to the remaining energy information of the node, and/or the network topology information, and/or the node hibernation information which are stored, and send the energy-saving decision to the wireless sensor network through the gateway device_(203), wherein the energy-saving decision of the energy-saving decision making module comprises: control for network topology, and control for hibernation and wakeup of the node; and the energy-saving decision made by the energy-saving decision making module is specifically:
in the control for the network topology, the remote management server is configured to determine a type of the wireless sensor network according to the network topology information that is stored, and replace according to an energy balance rule, a routing node or a cluster head node at regular intervals or each time when certain energy is consumed; and
in the control for the hibernation and wakeup of the node, the remote management server is configured to judge whether the node supports hibernation according to the node hibernation information, and sends a hibernation configuration command to the node when the node supports the hibernation and is not in a hibernation mode, and the node configures hibernation time for the node according to a situation of a data unloading task, enters a hibernation state after the data uploading task is completed, and automatically wakes up when the hibernation time is up.

7. An energy-saving management system for a wireless sensor network, **characterized by** comprising: the wireless sensor network, a gateway device and a remote management server as claimed in claim 6, wherein
the wireless sensor network is configured to send remaining energy information of a node, and/or network topology information, and/or node hibernation information to the remote management server through the gateway device and make a response according to an energy-saving decision of the remote management server; and
the remote management server is configured to store the remaining energy information of the node, and/or the network topology information, and/or the node hibernation information, make the energy-saving decision according to the remaining energy information of the node, and/or the network topology information, and/or the node hibernation information which are stored, and send the energy-saving decision to the wireless sensor network through the gateway device.

8. The system according to claim 7, **characterized in that** the wireless sensor network is configured to send the remaining energy information of the node to the remote management server through the gateway device is:
the node of the wireless sensor network is configured to send the remaining energy information of the node to the gateway device according to a set period, and the gateway device sends remaining energy information of all nodes to the remote management server after collecting the remaining energy information of all nodes; or,
the gateway device is configured to actively initiate a data request to the wireless sensor network, and the wireless sensor network is configured to send the remaining energy information of the node to the remote management server through the gateway device; or,
the remote management server is configured to actively query the wireless sensor network about the remaining energy information of the node, and the wireless sensor network is configured to make a response after receiving a query command.

9. The system according to claim 7, **characterized in that** the wireless sensor network is configured to send the remaining energy information of the node to the remote management server through the gateway device is: send the remaining energy information of the node together with sensing data to the remote management server.

10. The system according to claim 7, 8 or 9, **characterized in that** the wireless sensor network is configured to send the network topology information to the remote management server through the gateway device is:
a new node is configured to establish a routing to the gateway device when the new node is added to the wireless sensor network, and the gateway device is configured to send information of the routing, which is newly established, to the remote management server after the routing is completely established; or,
if a node is removed from the wireless sensor network, the gateway device is configured to send information indicating that the node has been removed to the remote management server when finding in a next communication process that the node has been removed; or,
when a node is moved, if the moved node has established a new routing to the gateway device before the gateway device finds that an original communication line is invalid, the gateway device is configured to send information of the new routing to the remote management server, otherwise, to perform a process for a case that the node is removed from the wireless sensor network.

## Patentansprüche

1. Energiesparmanagementverfahren für ein drahtloses Sensornetzwerk, umfassend:
Senden von Restenergie-Informationen eines Knotens und/oder Netzwerktopologieinformationen und/oder Knotenruhezustandsinformationen von dem drahtlosen Sensornetzwerk über eine Gateway-Vorrichtung an einen Fernmanagementserver (201),
durch den Fernmanagementserver Speichern der Restenergie-Informationen des Knotens und/oder der Netzwerktopologieinformationen und/oder der Knotenruhezustandsinformationen (202), Treffen einer Energiesparentscheidung gemäß den Restenergie-Informationen des Knotens und/oder den Netzwerktopologieinformationen und/oder den Knotenruhezustandsinformationen, die gespeichert wurden, und Senden der Energiesparentscheidung über die Gateway-Vorrichtung an das drahtlose Sensornetzwerk (203), wobei die Energiesparentscheidung des Fernmanagementservers umfasst: Steuerung für Netzwerktopologie und Steuerung für Ruhezustand und Aufwachen des Knoten, speziell:
in der Steuerung für die Netzwerktopologie, durch den Fernmanagementserver Ermitteln eines Typs des drahtlosen Sensornetzwerks gemäß der Netzwerktopologieinformationen, die gespeichert wurden, und Ersetzen eines Weiterleitungsknotens oder eines Cluster-Kopf-Knotens in regelmäßigen Abständen oder jedesmal, wenn gewisse Energie verbraucht wird, gemäß einer Energieausgleichregel, und
in der Steuerung für den Ruhezustand und das Aufwachen des Knotens, Beurteilen durch den Fernmanagementserver gemäß den Knotenruhezustandsinformationen, ob der Knoten den Ruhezustand unterstützt, und Senden eines Ruhezustandskonfigurationsbefehls an den Knoten, wenn der Knoten den Ruhezustand unterstützt und nicht im Ruhezustandmodus ist, und durch den Knoten Konfigurieren der Ruhezustandsdauer für den Knoten gemäß einer Situation einer Datenhochladeaufgabe, Eintreten in einen Ruhezustand nach Abschluss der Datenhochladeaufgabe und automatisches Aufwachen nach Ablauf der Ruhezustandsdauer, und
Antworten des drahtlosen Sensornetzwerks gemäß der Energiesparentscheidung des Fernmanagementservers (204).

2. Verfahren nach Anspruch 1, **dadurch gekennzeichnet, dass** das Senden der Restenergie-Informationen des Knotens durch das drahtlose Sensornetzwerk über die Gateway-Vorrichtung an den Fernmanagementserver ist:
Senden der Restenergie-Informationen des Knotens gemäß einer eingestellten Zeitspanne durch den Knoten des drahtlosen Sensornetzwerks an die Gateway-Vorrichtung und Senden von Restenergie-Informationen aller Knoten durch die Gateway-Vorrichtung an den Fernmanagementserver nach Erfassen der Restenergie-Informationen aller Knoten oder
aktives Einleiten einer Datenanforderung an das drahtlose Sensornetzwerk durch die Gateway-Vorrichtung und Senden der Restenergie-Informationen des Knotens durch das drahtlose Sensornetzwerk über die Gateway-Vorrichtung an den Fernmanagementserver oder
aktives Abfragen des drahtlosen Sensornetzwerks über die Restenergie-Informationen des Knotens durch den Fernmanagementserver und Antworten des drahtlosen Sensornetzwerks nach Empfang eines Abfragebefehls.

3. Verfahren nach Anspruch 1, **dadurch gekennzeichnet, dass** das Senden der Restenergie-Informationen des Knotens durch das drahtlose Sensornetzwerk über die Gateway-Vorrichtung an den Fernmanagementserver ist: Senden der Restenergie-Informationen des Knotens zusammen mit den Messdaten an den Fernmanagementserver.

4. Verfahren nach Anspruch 1, **dadurch gekennzeichnet, dass** das Senden der Netzwerktopologieinformationen durch das drahtlose Sensornetzwerk über die Gateway-Vorrichtung an den Fernmanagementserver ist:
Einrichten eines Leitwegs zu der Gateway-Vorrichtung durch einen neuen Knoten, wenn der neue Knoten zu dem drahtlosen Sensornetzwerk hinzugefügt wird, und das Senden von Informationen des Leitwegs, der neu eingerichtet ist, durch die Gateway-Vorrichtung an den Fernmanagementserver, nachdem der Leitweg vollständig eingerichtet worden ist, oder,
falls ein Knoten aus dem drahtlosen Sensornetzwerk entfernt wird, Senden von Informationen durch die Gateway-Vorrichtung, die dem Fernmanagementserver anzeigen, dass der Knoten entfernt wurde, wenn in einem nächsten Kommunikationsprozess festgestellt wird, dass der Knoten entfernt worden ist, oder,
wenn ein Knoten versetzt wird, falls der versetzte Knoten einen neuen Leitweg zu der Gateway-Vorrichtung eingerichtet hat, bevor die Gateway-Vorrichtung feststellt, dass eine ursprüngliche Übertragungsleitung ungültig ist, Senden von Informationen über den neuen Leitweg durch die Gateway-Vorrichtung an den Fernmanagementserver, ansonsten Durchführen eines Prozesses für einen Fall, dass der Knoten aus dem drahtlosen Sensornetzwerk entfernt wurde.

5. Verfahren nach Anspruch 1, **dadurch gekennzeichnet, dass** ein Informationsspeicherformat des Fernmanagementservers umfasst: einen Netzwerkidentifikator, einen Knotenidentifikator, Informationen über einen Leitweg von dem Knoten zu der Gateway-Vorrichtung, die Restenergie-Informationen des Knotens und die Knotenruhezustandsinformationen, wobei die Restenergie-Informationen einen absoluten Restenergiewert und einen prozentualen Restenergieanteil umfassen.

6. Fernmanagementserver, umfassend: ein Informationsspeichermodul und ein Energiesparentscheidungsmodul, wobei
das Informationsspeichermodul konfiguriert ist zum Speichern von Restenergie-Informationen eines Knotens, Netzwerktopologieinformationen und Knotenruhezustandsinformationen, die empfangen werden, (202), wobei ein Informationsspeicherformat des Informationsspeichermoduls umfasst: einen Netzwerkidentifikator, einen Knotenidentifikator, Informationen über einen Leitweg von dem Knoten zu der Gateway-Vorrichtung, die Restenergie-Informationen des Knotens und die Knotenruhezustandsinformationen, wobei die Restenergie-Informationen des Knotens einen absoluten Restenergiewert und einen prozentualen Restenergieanteil umfassen, und
das Energiesparentscheidungsmodul konfiguriert ist zum Treffen einer Energiesparentscheidung gemäß den Restenergie-Informationen des Knotens und/oder den Netzwerktopologieinformationen und/oder den Knotenruhezustandsinformationen, die gespeichert wurden, und Senden der Energiesparentscheidung über die Gateway-Vorrichtung an das drahtlose Sensornetzwerk (203), wobei die Energiesparentscheidung des Energiesparentscheidungsmoduls umfasst: Steuerung für Netzwerktopologie und Steuerung für Ruhezustand und Aufwachen des Knoten, und die von dem Energiesparentscheidungsmodul getroffene Energiesparentscheidung speziell ist:
in der Steuerung für die Netzwerktopologie der Fernmanagementserver konfiguriert ist zum Ermitteln eines Typs des drahtlosen Sensornetzwerks gemäß den Netzwerktopologieinformationen, die gespeichert wurden, und Ersetzen eines Weiterleitungsknotens oder eines Cluster-Kopf-Knotens in regelmäßigen Abständen oder jedesmal, wenn gewisse Energie verbraucht wird, gemäß einer Energieausgleichregel, und
in der Steuerung für den Ruhezustand und das Aufwachen des Knotens der Fernmanagementserver konfiguriert ist zum Beurteilen gemäß den Knotenruhezustandsinformationen, ob der Knoten den Ruhezustand unterstützt, und Senden eines Ruhezustandskonfigurationsbefehls an den Knoten, wenn der Knoten den Ruhezustand unterstützt und nicht in einem Ruhezustandmodus ist, und durch den Knoten Konfigurieren der Ruhezustandsdauer für den Knoten gemäß einer Situation einer Datenhochladeaufgabe, Eintreten in einen Ruhezustand nach Abschluss der Datenhochladeaufgabe und automatisches Aufwachen nach Ablauf der Ruhezustandsdauer.

7. Energiesparmanagementsystem für ein drahtloses Sensornetzwerk, **dadurch gekennzeichnet, dass** es umfasst: das drahtlose Sensornetzwerk, eine Gateway-Vorrichtung und einen Fernmanagementserver nach Anspruch 6, wobei
das drahtlose Sensornetzwerk konfiguriert ist zum Senden von Restenergie-Informationen eines Knotens und/oder Netzwerktopologieinformationen und/oder Knotenruhezustandsinformationen über die Gateway-Vorrichtung an den Fernmanagementserver und Antworten gemäß einer Energiesparentscheidung des Fernmanagementservers, und
der Fernmanagementserver konfiguriert ist zum Speichern der Restenergie-Informationen des Knotens und/oder der Netzwerktopologieinformationen und/oder der Knotenruhezustandsinformationen, Treffen der Energiesparentscheidung gemäß den Restenergie-Informationen des Knotens und/oder den Netzwerktopologieinformationen und/oder den Knotenruhezustandsinformationen, die gespeichert wurden, und Senden der Energiesparentscheidung über die Gateway-Vorrichtung an das drahtlose Sensornetzwerk.

8. System nach Anspruch 7, **dadurch gekennzeichnet, dass** das drahtlose Sensornetzwerk konfiguriert ist zum Senden der Restenergie-Informationen des Knotens über die Gateway-Vorrichtung an den Fernmanagementserver ist:
der Knoten des drahtlosen Sensornetzwerks konfiguriert ist zum Senden der Restenergie-Informationen des Knotens gemäß einer eingestellten Zeitspanne an die Gateway-Vorrichtung und das Senden von Restenergie-Informationen aller Knoten durch die Gateway-Vorrichtung an den Fernmanagementserver nach Erfassen der Restenergie-Informationen aller Knoten oder
die Gateway-Vorrichtung konfiguriert ist zum aktiven Einleiten einer Datenanforderung an das drahtlose Sensornetzwerk und das drahtlose Sensornetzwerk konfiguriert ist zum Senden der Restenergie-Informationen des Knotens über die Gateway-Vorrichtung an den Fernmanagementserver oder
der Fernmanagementserver konfiguriert ist zum aktiven Abfragen des drahtlosen Sensornetzwerks über die Restenergie-Informationen des Knotens und das drahtlose Sensornetzwerk konfiguriert ist zum Antworten nach Empfang eines Abfragebefehls.

9. System nach Anspruch 7, **dadurch gekennzeichnet, dass** das drahtlose Sensornetzwerk konfiguriert ist zum Senden der Restenergie-Informationen des Knotens über die Gateway-Vorrichtung an den Fernmanagementserver ist: Senden der Restenergie-Informationen des Knotens zusammen mit den Messdaten an den Fernmanagementserver.

10. System nach Anspruch 7, 8 oder 9, **dadurch gekennzeichnet, dass** das drahtlose Sensornetzwerk konfiguriert ist zum Senden der Netzwerktopologieinformationen über die Gateway-Vorrichtung an den Fernmanagementserver ist:
ein neuer Knoten konfiguriert ist zum Einrichten eines Leitwegs zu der Gateway-Vorrichtung, wenn der neue Knoten zu dem drahtlosen Sensornetzwerk hinzugefügt wird, und die Gateway-Vorrichtung konfiguriert ist zum Senden von Informationen des Leitwegs, der neu eingerichtet ist, an den Fernmanagementserver, nachdem der Leitweg vollständig eingerichtet worden ist; oder,
falls ein Knoten aus dem drahtlosen Sensornetzwerk entfernt wird, die Gateway-Vorrichtung konfiguriert ist zum Senden von Informationen, die dem Fernmanagementserver anzeigen, dass der Knoten entfernt wurde, wenn in einem nächsten Kommunikationsprozess festgestellt wird, dass der Knoten entfernt worden ist; oder,
wenn ein Knoten versetzt wird, falls der versetzte Knoten einen neuen Leitweg zu der Gateway-Vorrichtung eingerichtet hat, bevor die Gateway-Vorrichtung feststellt, dass eine ursprüngliche Übertragungsleitung ungültig ist, die Gateway-Vorrichtung konfiguriert ist zum Senden von Informationen des neuen Leitwegs an den Fernmanagementserver, ansonsten konfiguriert ist zum Durchführen eines Prozesses für einen Fall, dass der Knoten aus dem drahtlosen Sensornetzwerk entfernt wurde.

## Revendications

1. Procédé de gestion d'économie d'énergie pour un réseau de capteurs sans fil, comportant :
l'étape dans laquelle le réseau de capteurs sans fil envoie des informations se rapportant à l'énergie résiduelle d'un noeud, et/ou des informations se rapportant à la topologie de réseau, et/ou des informations se rapportant à l'hibernation de noeud à un serveur de gestion à distance par le biais d'un dispositif de passerelle (201) ;
l'étape dans laquelle le serveur de gestion à distance stocke les informations se rapportant à l'énergie résiduelle du noeud, et/ou les informations se rapportant à la topologie de réseau, et/ou les informations se rapportant à l'hibernation de noeud (202), prend une décision d'économie d'énergie en fonction des informations se rapportant à l'énergie résiduelle du noeud, et/ou des informations se rapportant à la topologie de réseau, et/ou des informations se rapportant à l'hibernation de noeud qui sont stockées, et envoie la décision d'économie d'énergie au réseau de capteurs sans fil par le biais du dispositif de passerelle (203), dans lequel la décision d'économie d'énergie du serveur de gestion à distance comporte : la commande de topologie de réseau, et la commande d'hibernation et de réveil du noeud, de manière spécifique :
dans le cadre de la commande de topologie de réseau, l'étape dans laquelle le serveur de gestion à distance détermine un type du réseau de capteurs sans fil en fonction des informations se rapportant à la topologie de réseau qui sont stockées, et remplace, en fonction d'une règle de bilan énergétique, un noeud de routage ou un noeud chef de groupe à intervalles réguliers ou chaque fois qu'une certaine quantité d'énergie est consommée ; et
dans le cadre de la commande d'hibernation et de réveil du noeud, l'étape dans laquelle le serveur de gestion à distance juge si le noeud supporte l'hibernation en fonction des informations se rapportant à l'hibernation de noeud, et envoie une commande de configuration d'hibernation au noeud quand le noeud supporte l'hibernation et n'est pas en mode d'hibernation, et l'étape dans laquelle le noeud configure le temps d'hibernation pour le noeud en fonction d'une situation d'une tâche de téléchargement de données, entre dans un état d'hibernation une fois que la tâche de téléchargement de données est effectuée, et se réveille automatiquement quand le temps d'hibernation est écoulé ; et
l'étape dans laquelle le réseau de capteurs sans fil donne une réponse en fonction de la décision d'économie d'énergie du serveur de gestion à distance (204).

2. Procédé selon la revendication 1, **caractérisé en ce que** l'étape dans laquelle le réseau de capteurs sans fil envoie les informations se rapportant à l'énergie résiduelle du noeud au serveur de gestion à distance par le biais du dispositif de passerelle comporte :
l'étape dans laquelle le noeud du réseau de capteurs sans fil envoie les informations se rapportant à l'énergie résiduelle du noeud au dispositif de passerelle en fonction d'une durée déterminée, et dans laquelle le dispositif de passerelle envoie des informations se rapportant à l'énergie résiduelle de tous les noeuds au serveur de gestion à distance après avoir collecté les informations se rapportant à l'énergie résiduelle de tous les noeuds ; ou,
l'étape dans laquelle le dispositif de passerelle initialise activement une demande de données au réseau de capteurs sans fil, et dans laquelle le réseau de capteurs sans fil envoie les informations se rapportant à l'énergie résiduelle du noeud au serveur de gestion à distance par le biais du dispositif de passerelle ; ou
l'étape dans laquelle le serveur de gestion à distance interroge activement le réseau de capteurs sans fil à propos des informations se rapportant à l'énergie résiduelle du noeud, et dans laquelle le réseau de capteurs sans fil donne une réponse après avoir reçu une commande d'interrogation.

3. Procédé selon la revendication 1, **caractérisé en ce que** l'étape dans laquelle le réseau de capteurs sans fil envoie les informations se rapportant à l'énergie résiduelle du noeud au serveur de gestion à distance par le biais du dispositif de passerelle comporte : l'étape consistant à envoyer les informations se rapportant à l'énergie résiduelle du noeud ainsi que l'étape consistant à envoyer des données se rapportant à la détection au serveur de gestion à distance.

4. Procédé selon la revendication 1, **caractérisé en ce que** l'étape dans laquelle le réseau de capteurs sans fil envoie les informations se rapportant à la topologie de réseau au serveur de gestion à distance par le biais du dispositif de passerelle comporte :
l'étape dans laquelle un nouveau noeud établit un routage jusqu'au dispositif de passerelle quand le nouveau noeud est ajouté au réseau de capteurs sans fil, et dans laquelle le dispositif de passerelle envoie des informations se rapportant au routage, qui est nouvellement établi, au serveur de gestion à distance une fois que le routage est complètement établi ; ou,
si un noeud est supprimé du réseau de capteurs sans fil, l'étape dans laquelle le dispositif de passerelle envoie des informations indiquant que le noeud a été supprimé au serveur de gestion à distance lorsque l'on découvre, dans un processus de communication suivant, que le noeud a été supprimé ; ou,
quand un noeud est déplacé, si le noeud déplacé a établi un nouveau routage jusqu'au dispositif de passerelle avant que le dispositif de passerelle ne trouve qu'une ligne de communication d'origine est invalide, l'étape dans laquelle le dispositif de passerelle envoie des informations se rapportant au nouveau routage au serveur de gestion à distance, sinon, l'étape consistant à effectuer un processus pour un cas de figure où le noeud est supprimé du réseau de capteurs sans fil.

5. Procédé selon la revendication 1, **caractérisé en ce qu'**un format de stockage d'informations du serveur de gestion à distance comporte : un identifiant de réseau, un identifiant de noeud, des informations se rapportant à un routage depuis le noeud jusqu'au dispositif de passerelle, les informations se rapportant à l'énergie résiduelle du noeud, et les informations se rapportant à l'hibernation de noeud, dans lequel les informations se rapportant à l'énergie résiduelle du noeud comportent une valeur absolue de l'énergie résiduelle et un pourcentage de l'énergie résiduelle.

6. Serveur de gestion à distance, comportant : un module de stockage d'informations et un module de prise de décision d'économie d'énergie, dans lequel
le module de stockage d'informations est configuré pour stocker des informations se rapportant à l'énergie résiduelle d'un noeud, des informations se rapportant à la topologie de réseau et des informations se rapportant à l'hibernation de noeud qui sont reçues (202), dans lequel un format de stockage d'informations du module de stockage d'informations comporte : un identifiant de réseau, un identifiant de noeud, des informations se rapportant à un routage depuis le noeud jusqu'au dispositif de passerelle, les informations se rapportant à l'énergie résiduelle du noeud, et les informations se rapportant à l'hibernation de noeud, dans lequel les informations se rapportant à l'énergie résiduelle du noeud comportent une valeur absolue de l'énergie résiduelle et un pourcentage de l'énergie résiduelle ; et
le module de prise de décision d'économie d'énergie est configuré pour prendre une décision d'économie d'énergie en fonction des informations se rapportant à l'énergie résiduelle du noeud, et/ou des informations se rapportant à la topologie de réseau, et/ou des informations se rapportant à l'hibernation de noeud qui sont stockées, et pour envoyer la décision d'économie d'énergie au réseau de capteurs sans fil par le biais du dispositif de passerelle (203), dans lequel la décision d'économie d'énergie du module de prise de décision d'économie d'énergie comporte : la commande de topologie de réseau, et la commande d'hibernation et de réveil du noeud ; et la décision d'économie d'énergie faite par le module de prise de décision d'économie d'énergie comporte de manière spécifique comme qui :
dans le cadre de la commande de topologie de réseau, le serveur de gestion à distance est configuré pour déterminer un type du réseau de capteurs sans fil en fonction des informations se rapportant à la topologie de réseau qui sont stockées, et pour remplacer, en fonction d'une règle de bilan énergétique, un noeud de routage ou un noeud chef de groupe à intervalles réguliers ou chaque fois qu'une certaine quantité d'énergie est consommée ; et
dans le cadre de la commande d'hibernation et de réveil du noeud, le serveur de gestion à distance est configuré pour juger si le noeud supporte l'hibernation en fonction des informations se rapportant à l'hibernation de noeud, et envoie une commande de configuration d'hibernation au noeud quand le noeud supporte l'hibernation et n'est pas en mode d'hibernation, et le noeud configure le temps d'hibernation pour le noeud en fonction d'une situation d'une tâche de téléchargement de données, entre dans un état d'hibernation une fois que la tâche de téléchargement de données est effectuée, et se réveille automatiquement quand le temps d'hibernation est écoulé.

7. Système de gestion d'économie d'énergie pour un réseau de capteurs sans fil, **caractérisé par** ce qu'il comporte : le réseau de capteurs sans fil, un dispositif de passerelle et un serveur de gestion à distance selon la revendication 6, dans lequel
le réseau de capteurs sans fil est configuré pour envoyer des informations se rapportant à l'énergie résiduelle d'un noeud, et/ou des informations se rapportant à la topologie de réseau, et/ou des informations se rapportant à l'hibernation de noeud au serveur de gestion à distance par le biais du dispositif de passerelle et pour donner une réponse en fonction d'une décision d'économie d'énergie du serveur de gestion à distance ; et
le serveur de gestion à distance est configuré pour stocker les informations se rapportant à l'énergie résiduelle du noeud, et/ou les informations se rapportant à la topologie de réseau, et/ou les informations se rapportant à l'hibernation de noeud, pour prendre la décision d'économie d'énergie en fonction des informations se rapportant à l'énergie résiduelle du noeud, et/ou des informations se rapportant à la topologie de réseau, et/ou des informations se rapportant à l'hibernation de noeud qui sont stockées, et pour envoyer la décision d'économie d'énergie au réseau de capteurs sans fil par le biais du dispositif de passerelle.

8. Système selon la revendication 7, **caractérisé en ce que** le réseau de capteurs sans fil est configuré pour envoyer les informations se rapportant à l'énergie résiduelle du noeud au serveur de gestion à distance par le biais du dispositif de passerelle, comme qui :
le noeud du réseau de capteurs sans fil est configuré pour envoyer les informations se rapportant à l'énergie résiduelle du noeud au dispositif de passerelle en fonction d'une durée déterminée, et le dispositif de passerelle envoie des informations se rapportant à l'énergie résiduelle de tous les noeuds au serveur de gestion à distance après avoir collecté les informations se rapportant à l'énergie résiduelle de tous les noeuds ; ou,
le dispositif de passerelle est configuré pour initialiser activement une demande de données au réseau de capteurs sans fil, et le réseau de capteurs sans fil est configuré pour envoyer les informations se rapportant à l'énergie résiduelle du noeud au serveur de gestion à distance par le biais du dispositif de passerelle ; ou,
le serveur de gestion à distance est configuré pour interroger activement le réseau de capteurs sans fil à propos des informations se rapportant à l'énergie résiduelle du noeud, et le réseau de capteurs sans fil est configuré pour donner une réponse après avoir reçu une commande d'interrogation.

9. Système selon la revendication 7, **caractérisé en ce que** le réseau de capteurs sans fil est configuré pour envoyer les informations se rapportant à l'énergie résiduelle du noeud au serveur de gestion à distance par le biais du dispositif de passerelle comportant : l'étape consistant à envoyer les informations se rapportant à l'énergie résiduelle du noeud ainsi que les données se rapportant à la détection au serveur de gestion à distance.

10. Système selon la revendication 7, la revendication 8 ou la revendication 9, **caractérisé en ce que** le réseau de capteurs sans fil est configuré pour envoyer les informations se rapportant à la topologie de réseau au serveur de gestion à distance par le biais du dispositif de passerelle comme qui :
un nouveau noeud est configuré pour établir un routage jusqu'au dispositif de passerelle quand le nouveau noeud est ajouté au réseau de capteurs sans fil, et le dispositif de passerelle est configuré pour envoyer des informations se rapportant au routage, qui est nouvellement établi, au serveur de gestion à distance une fois que le routage est complètement établi ; ou
si un noeud est supprimé du réseau de capteurs sans fil, le dispositif de passerelle est configuré pour envoyer des informations indiquant que le noeud a été supprimé au serveur de gestion à distance lorsque l'on découvre, dans un processus de communication suivant, que le noeud a été supprimé ; ou,
quand un noeud est déplacé, si le noeud déplacé a établi un nouveau routage jusqu'au dispositif de passerelle avant que le dispositif de passerelle ne trouve qu'une ligne de communication d'origine est invalide, le dispositif de passerelle est configuré pour envoyer des informations se rapportant au nouveau routage au serveur de gestion à distance, sinon, est configuré pour effectuer un processus pour un cas de figure où le noeud est supprimé du réseau de capteurs sans fil.
